# EUROPÄISCHE PATENTSCHRIFT

(11) **EP 1 568 119 B1**
(45) Veröffentlichungstag und Bekanntmachung des Hinweises auf die Patenterteilung: **19.09.2007**
(21) Anmeldenummer: 03767396.9
(22) Anmeldetag: 29.10.2003
(51) Int. Cl.: H02K 13/02, H01R 39/34

(54) **ELEKTRISCHE MASCHINE MIT EINER SCHLEIFRINGANORDNUNG**
ELECTRICAL MACHINE COMPRISING A SLIP-RING ARRANGEMENT
MACHINE ELECTRIQUE COMPORTANT UN DISPOSITIF BAGUE COLLECTRICE

(30) Priorität: 05.12.2002 DE 10256974
(43) Veröffentlichungstag der Anmeldung: 31.08.2005
(73) Patentinhaber: SIEMENS AKTIENGESELLSCHAFT, 80333 München (DE)
(72) Erfinder: GRILLENBERGER, Reiner, 91575 Windsbach (DE)
(86) Internationale Anmeldenummer: PCT/DE2003/003585
(87) Internationale Veröffentlichungsnummer: WO 2004/051826

(56) Entgegenhaltungen:
- DD-A- 52 714
- DE-C- 368 956
- GB-A- 2 282 489
- US-A- 3 134 041
- US-A- 5 777 408

## Beschreibung

Die Erfindung betrifft eine elektrische Maschine mit einer Schleifringanordnung.

Elektrische Maschinen sowohl Motoren als auch Generatoren, mit denen elektrische Energie in Rotationsenergie oder umgekehrt Rotationsenergie in elektrische Energie umgewandelt wird, benötigen eine Energiezufuhr für die drehbar angeordneten Spulen des Läufers, die kraftschlüssig oder formschlüssig mit der Drehachse verbunden sind. Dies erfolgt üblicherweise durch Schleifringe, die mit feststehenden Bürsten leitend verbunden sind.

Normalerweise bestehen Schleifringe aus Metallen wie Kupfer, Kupferlegierungen, z.B. Bronze, Zinnbronze, Nickelbronze, Silber oder Stahl. Die Schleifringe werden durch isolierende Befestigungen mit einer Drehachse verbunden, wobei sie dieser gegenüber und untereinander isoliert sind. Entlang des Umfangs des Schleifringes sind elektrisch leitende Bürsten ortsfest angeordnet, die vorzugsweise durch Federkraft mit der Oberfläche der Schleifringe Kontakt halten. Die Übertragung der elektrischen Energie vom Schleifring auf den Läufer erfolgt über metallische Leiter, die mit dem Körper des Schleifrings elektrisch leitend verbunden sind.

So ist aus der DE 30 25 735 A1 eine elektrische Maschine mit einer Rotorwicklung bekannt, bei der die Stromzuführungsleitung des Rotors mit Hilfe von Kabelhaltern festgehalten wird. Die Kabelhalter dienen dabei gleichzeitig als Mittel zum Abdichten eines Läuferlagers. Die DE 368 956 zeigt eine elektrische Maschine mit einer Schleifringanordnung.

Der Erfindung liegt nunmehr die Aufgabe zugrunde eine elektrische Maschine zu schaffen, die in einfacher Art und Weise Montage- und Wartungsarbeiten einer Schleifringanordnung an einer elektrischen Maschine zulässt und dabei den Bürstenabrieb so klein wie möglich hält. Des Weiteren soll eine derartige elektrische Maschine insbesondere bei läuferseitig umrichtergespeisten Drehstrommaschinen und insbesondere Windkraftanlagen einsetzbar sein.

Die Lösung der gestellten Aufgabe gelingt durch eine elektrische Maschine gemäß dem Anspruch 1.

Dabei werden nun die Läuferleitungen, also die elektrische Verbindung des Läufers mit den Schleifringen insbesondere bei außerhalb der elektrischen Maschine positionierten Schleifringanordnungen durch die Ausnehmungen der auf die Welle gesetzte Buchse geführt. Diese Buchse weist zu diesem Zweck radial angeordnete Bohrungen oder Schlitze auf. Die Buchse ist vorzugsweise auf die Welle geschrumpft, es sind aber auch andere form- oder stoffschlüssige Verbindungsarten von Buchse mit Welle einsetzbar.

Damit ergibt sich gegenüber den herkömmlichen Tieflochbohrung eine hohe Prozesssicherheit und einfache Montage der Läuferleitungen. Außerdem können die Läuferleitungen zwischen Schleifringanordnung und Läufer insbesondere zu den Schaltringen kurzgehalten werden. Durch Verwendung der erfindungsgemäßen Buchse ist keine Sonderbearbeitung der Welle mehr erforderlich. Des weiteren können die Lager der elektrischen Maschine nunmehr ohne Sonderwerkzeug abgezogen werden. Durch die direkte ungekuppelte Anbindung der Schleifringanordnung an die elektrische Maschine, also Schleifringanordnung und Läufer befinden sich auf derselben Welle, wird eine sichere Ableitung der Wellenströme gewährleistet. Zusätzliche Elemente, wie Zwischengehäuse, Wellenzapfen, Kupplungen, Zentrierungen entfallen und führen somit zu einer Kosteneinsparung.

In vorteilhafter Weise ist auf der der elektrischen Maschine zugewandten Seite die Buchse zumindest mit einem Flansch für die Anbringung für einen Lüfter oder Auswuchtscheiben versehen. Demzufolge sind keine weiteren Zusatzelemente für Anbringung von Lüfter oder Auswuchtscheiben vorzusehen.

Die Buchse ist aus nicht magnetisierbarem oder schlecht magnetisierbarem Material, z.B. wie Edelstahl; Messing, Kunststoff oder Keramik. Entscheidend dabei ist, dass sich die Buchse im Betrieb u.a. aufgrund der Einwirkungen der elektromagnetischen Felder nicht zu sehr aufheizt.

In besonders vorteilhafter Weise befindet sich bei hohen Schmutzanfällen zumindest ein zusätzlicher O-Ring auf den Läuferleitungen.

Durch die nunmehr sich ergebende Kürze der Läuferleitungen sind relativ wenig Fixierungselemente der Läuferleitungen erforderlich. Sofern aber welche z.B. aus betriebstechnischen Gründen erforderlich sind, sind diese zumindest auf der der elektrischen Maschine zugewandten Seite der Buchse als Bandage vorgesehen. Das führt dazu, dass diese Läuferleitungen stabil und dauerhaft an der Welle befestigt sind.

Die Anwendung einer derartigen elektrischen Maschine bei Windkraftgeneratoren ist besonders vorteilhaft, da die erfindungsgemäße elektrische Maschine nur sehr große Wartungsintervalle benötigt was somit vor allem zu weniger Stillstandszeiten führt.

Die Erfindung sowie weitere vorteilhafte Ausgestaltungen der Erfindung gemäß Merkmale der Unteransprüche wird im folgenden anhand eines schematisch dargestellten Ausführungsbeispiels in der Zeichnung näher erläutert. Darin zeigen:
FIG 1 einen Längsschnitt einer Schleifringanordnung.
FIG 2 einen Detailausschnitt

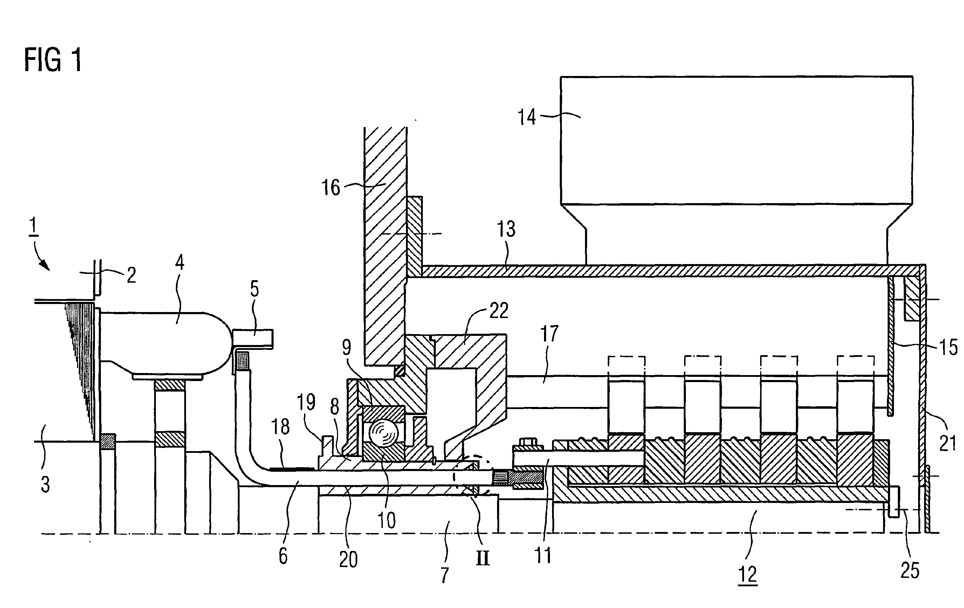

FIG 1 zeigt in schematischer Darstellung eine nicht näher dargestellte elektrische Maschine 1 mit einem Ständer 2 und einem Läufer 3. Der Läufer 3 weist einen Wickelkopf 4 und Schaltringe 5 auf, an die Läuferleitungen 6 führen. Die Läuferleitungen 6 verlaufen dabei durch axiale Ausnehmungen 20, durch eine Buchse 8, die zwischen der Welle 7 und einem Lager 9, dabei insbesondere dem Lagerinnenring 10 positioniert ist. Die Ausnehmungen 20 sind dabei als axiale Bohrungen ausgeführt, es sind auch axiale verlaufende Schlitze vorstellbar, die zum Innen- oder Außendurchmesser der Buchse 8 offen sind. Insbesondere bei relativ dünn ausgeführten Lagerinnenringen 10 ist es vorteilhaft die Schlitze am Innendurchmesser der Buchse 8 verlaufen zu lassen, um "Rippeleffekte" bei Betrieb der elektrischen Maschine zu vermeiden.

Die Läuferleitung 6 einer Phase ist dabei mit einem korrespondierendem Teil einer Schleifringanordnung 12 vorteilhafterweise über eine Klemmschelle 11 elektrisch kontaktiert.

Die Ausnehmungen 20 und damit die Läuferleitungen 6 sind gleichmäßig am Umfang der Buchse 8 verteilt. Beispielsweise ist bei einer Läuferleitung 6 pro Phase zwischen den Ausnehmungen in Umfangsrichtung ein Versatz von 120° vorhanden. Bei mehreren Läuferleitungen pro Phase ist vorteilhafterweise der Winkelversatz zwischen zwei Ausnehmungen geringer. Damit werden Unwuchten vermieden. Trotzdem auftretende Unwuchten, sind durch Auswuchtscheiben insbesondere an einem Flansch 19 der Buchse 8 behebbar.

Die Schleifringanordnung 12 und der Läufer 3 befinden sich auf derselben Welle 7. Ein Seitenteil 13, das mit dem Lagerschild 16 verbunden ist, verbleibt am Lagerschild 16, wenn die Schleifringanordnung 12 ausgetauscht wird. Auf diesem Seitenteil 13 ist der Klemmenkasten 14 befestigt, so dass bei Demontage des Schleifringanordnung 12 die Anschlussleitungen vom Klemmenkasten 14 zur Bürstenanordnung nicht abgeklemmt werden müssen.

Der Bürstenbolzen 17 ist in einer besonderen Ausführungsform über ein weiteres Seitenteil 15 an dem Seitenteil 13 abgestützt sein, was sich positiv gegenüber Vibrationen auswirkt.

Die Seitenteile 13 und die Abdeckung 21 haben keine Trägerfunktion für den Bürstenbolzen 17, sondern lediglich eine Abdeckfunktion. Somit müssen die Seitenteile 13 und die Abdeckung 21 nicht passgenau zentriert werden.

Die Läuferleitungen 6 sind zwischen dem Lagersystem und dem Läufer 3 durch eine Bandage 18 an der Welle 7 fixiert. Die Buchse 8 weist insbesondere auf der dem Läufer 3 zugewandeten Seite einen Flansch 19 auf, der vorzugsweise zur Positionierung von nicht näher dargestellten Auswuchtscheiben oder Lüftern geeignet ist.

Die Schleifringanordnung 12 ist im Lager 9 fliegend gelagert. Die Schleifringanordnung 12 ist durch eine Übergangspassung und mit vorzugsweise drei Schrauben 25 an der Welle 7 fixiert. Die Schleifringanordnung 12 weist gegenüber herkömmlichen Schleifringanordnungen keine Eigenlagerung auf, so dass weniger Verschleißteile gegenüber herkömmlichen Schleifringanordnungen wie Lager und Kupplung vorhanden sind. Damit sind potentielle Störquellen an der elektrischen Maschine beseitigt, die bei Ausfall schwerwiegende Schäden verursachen können. Demzufolge entfällt auch eine Lagerüberwachung.

Durch die modulare Gesamtanordnung ergibt sich auch eine einfache Demontage der Schleifringanordnung 12, wobei keine Demontage der bürstenseitigen Anschlussleitungen notwendig ist. Es wird die Abdeckung 21 entfernt, die Schrauben 25 gelöst, die Bürsten abgezogen und die Schleifringanordnung 12 entnommen. Der Bürstenbolzen 17 muss nicht demontiert werden.

Durch die Gesamtanordnung ist auch ein Einschleifen der Bürsten mit Dummy-Schleifringanordnung an einer elektrischen Maschine 1 möglich, dies ergibt eine gute Kontaktierung der Bürsten und somit einen vergleichsweise geringeren Verschleiß im Betrieb. Zur Befestigung und Zentrierung des Bürstenbolzens 17 wird vorzugsweise der äußere Lagerdeckel 22 verwendet, wodurch auf weitere Zentrierungen und zusätzliche Bauteile verzichtet werden kann.

Der Durchmesser der Schleifringanordnung 12 wird gegenüber herkömmlichen Systemen geringer, so dass sich durch die geringeren Umfangsgeschwindigkeiten ein geringerer Bürstenabrieb einstellt. D.h. bei gleichbleibender Winkelgeschwindigkeit ergibt sich eine geringere Umfangsgeschwindigkeit.

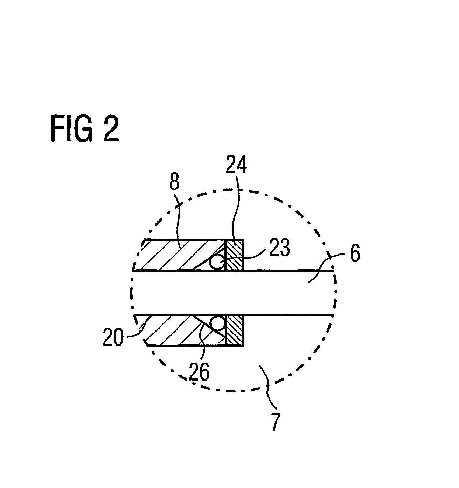

FIG 2 zeigt einen Detailausschnitt, der beispielhaft die Anordnung eines O-Rings 23 in der Buchse 8 zeigt. Der O-Ring 23 umgibt die Läuferleitung 6 zumindest auf einer Seite der Buchse 8. Damit wird zusätzlich verhindert, dass Schmutz oder leitfähige Teilchen z.B. der Schleifringanordnung 12 in den Wickelraum der elektrischen Maschine 1 gelangen.

Zur Positionierung des O-Rings 23 ist vorteilhafterweise zumindest auf der Stirnseite der Buchse 8 eine die Ausnehmung 20 umgebende Anfasung 26 vorhanden. Zur weiteren Fixierung des O-Rings 23 ist ein zusätzlicher Deckel 24 vorgesehen, der beispielsweise an die Stirnseite der Buchse 8 angeklebt werden kann. Der Deckel 24 ist entweder so ausgebildet, dass er alle O-Ringe 23 einer Stirnseite fixiert, oder aber jede Ausnehmung 20 ist mit jeweils einem Deckel 24 versehen.

## Patentansprüche

1. Elektrische Maschine (1) mit einem Ständer (2), einem Läufer (3), einer Schleifringanordnung (12) zur Übertragung der elektrischen Energie, wobei die elektrische Maschine (1) folgende Merkmale aufweist:
- zumindest einem Lagersystem (9,16) zwischen Läufer (3) und Schleifringanordnung (12),
- Schleifringanordnung (12) und Läufer (3) sind direkt auf einer gemeinsamen Welle (7) positioniert,
- im Bereich des Lagersystems (9,16) ist zumindest eine Buchse (8), zwischen Welle (7) und Lagerinnenring (10) vorhanden,
- die Buchse (8) weist zumindest eine axial durchgehende Ausnehmung (20) auf, **gekennzeichnet durch**
- mit an einem Bürstenbolzen (17) befindlichen Bürsten, wobei der Bürstenbolzen (17) am Lagerdeckel (22) befestigt ist.

2. Elektrische Maschine (1) nach Anspruch 1, **dadurch gekennzeichnet, dass** die Ausnehmungen (20) gleichmäßig am Umfang der Buchse (8) verteilt sind.

3. Elektrische Maschine (1) nach Anspruch 1 oder 2, **dadurch gekennzeichnet, dass** die Ausnehmungen (20) als Schlitze ausgeführt sind.

4. Elektrische Maschine (1) nach einem der vorhergehenden Ansprüche, **dadurch gekennzeichnet, dass** auf der der elektrischen Maschine (1) zugewandten Seite die Buchse (8) zumindest einen Flansch (19) insbesondere für Lüfter und/oder Auswuchtscheiben aufweist.

5. Elektrische Maschine (1) nach einem der vorhergehenden Ansprüche, **dadurch gekennzeichnet, dass** die in den Ausnehmungen (20) befindlichen Läuferleitungen (6) einen O-Ring (23) aufweisen.

6. Elektrische Maschine (1) nach einem der vorhergehenden Ansprüche, **dadurch gekennzeichnet, dass** die Läuferleitung (6) zumindest auf der der elektrischen Maschine (1) zugewandten Seite der Buchse (8) eine Bandage (18) zur Fixierung der Läuferleitung aufweist.

7. Elektrische Maschine (1) nach einem oder mehreren der vorhergehenden Ansprüche, **dadurch gekennzeichnet, dass** die Buchse (8) aus nicht magnetisierbarem oder schlecht magnetisierbarem Werkstoff ist.

8. Anwendung einer elektrische Maschine (1) nach einem der vorhergehenden Ansprüche bei läuferseitig umrichtergespeisten Drehstrommaschinen.

9. Anwendung einer elektrische Maschine (1) nach einem der vorhergehenden Ansprüche 1 bis 5 bei Windkraftgeneratoren und unterbrechungsfreie Stromversorgungsanlagen.

## Claims

1. Electrical machine (1) comprising a stator (2), a rotor (3) and a slip ring arrangement (12) for transferring the electrical energy, wherein the electrical machine (1) has the following features:
- at least one bearing system (9,16) between rotor (3) and slip ring arrangement (12),
- slip ring arrangement (12) and rotor (3) are positioned directly on a common shaft (7),
- at least one bushing (8) is present between shaft (7) and bearing inner ring (10) in the area of the bearing system (9,16),
- the bushing (8) has at least one axially continuous recess (20), **characterised by**
- brushes contained on a brush bolt (17), the brush bolt (17) being mounted on the bearing cover (22).

2. Electrical machine (1) according to claim 1,
**characterised in that** the recesses (20) are evenly distributed around the circumference of the bushing (8).

3. Electrical machine (1) according to claim 1 or 2,
**characterised in that** the recesses (20) are embodied as slots.

4. Electrical machine (1) according to one of the preceding claims, **characterised in that** on the side facing the electrical machine (1) the bushing (8) has at least one flange (19) in particular for fans and/or balancing washers.

5. Electrical machine (1) according to one of the preceding claims, **characterised in that** the rotor leads (6) contained in the recesses (20) have an 0-ring.

6. Electrical machine (1) according to one of the preceding claims, **characterised in that** at least on the side of the bushing (8) facing the electrical machine (1) the rotor lead (6) has a bandage (18) for fixing the rotor lead.

7. Electrical machine (1) according to one or more of the preceding claims, **characterised in that** the bushing (8) is made of non-magnetisable or poorly magnetisable material.

8. Use of an electrical machine (1) according to one of the preceding claims in three-phase machines that are fed by inverter on the rotor side.

9. Use of an electrical machine (1) according to one of the preceding claims 1 to 5 in wind-driven generators and uninterruptible power supply systems.

## Revendications

1. Machine (1) électrique comprenant un stator (2), un rotor (3), un dispositif (12) à bague collectrice pour la transmission de l'énergie électrique, la machine (1) électrique ayant des caractéristiques suivantes :
- au moins un système (9, 16) de palier entre le rotor (3) et le dispositif (12) à bague collectrice,
- le dispositif (12) à bague collectrice et le rotor (3) sont mis en position directement sur un arbre (7) commun,
- dans la région du système (9, 16) de palier, est prévue au moins une douille (8) entre l'arbre (7) et l'anneau (10) intérieur du palier,
- la douille (8) a au moins un évidement (20) traversant axialement, **caractérisée en ce que**
- la machine comprend des balais se trouvant sur un axe (17) de balai, l'axe (17) de balai étant fixé sur le chapeau (22) de palier.

2. Machine (1) électrique suivant la revendication 1, **caractérisée en ce que** les évidements (20) sont répartis uniformément sur le pourtour de la douille (8).

3. Machine (1) électrique suivant la revendication 1 ou 2, **caractérisée en ce que** les évidements (20) sont réalisés sous la forme de fentes.

4. Machine (1) électrique suivant l'une des revendications précédentes, **caractérisée en ce que**, du côté tourné vers la machine (1) électrique, la douille (8) a au moins une bride (19), notamment pour un ventilateur, et/ou des rondelles d'équilibrage du balourd.

5. Machine (1) électrique suivant l'une des revendications précédentes, **caractérisée en ce que** les lignes (6) du rotor se trouvant dans les évidements (20) ont un joint (23) torique.

6. Machine (1) suivant l'une des revendications précédentes, **caractérisée en ce que** la ligne (6) du rotor a, au moins du côté de la douille (8) tournée vers la machine (1) électrique, un bandage (18) d'immobilisation de la ligne de rotor.

7. Machine (1) suivant l'une ou plusieurs des revendications précédentes, **caractérisée en ce que** la douille (8) est en un matériau non magnétisable ou difficilement magnétisable.

8. Utilisation d'une machine (1) électrique suivant l'une des revendications précédentes dans des moteurs à courant triphasé à alimentation par convertisseur du côté du rotor.

9. Utilisation d'une machine (1) électrique suivant l'une des revendications 1 à 5 précédentes dans des éoliennes et dans des installations d'alimentation en courant sans interruption.
